# EUROPEAN PATENT APPLICATION

(11) **EP 1 886 784 A1**
(43) Date of publication of application: **13.02.2008**
(21) Application number: 06118697.9
(22) Date of filing: 09.08.2006
(51) Int. Cl.: B29C 31/00, B29C 37/00, B23Q 1/00, B29C 43/34

(54) **Clamping apparatus and method**

(71) Applicant: Pfizer Products Inc., Groton, CT 06340 (US)
(72) Inventor: Goossens, Francis, 2880,Bornem (BE); Surinx, Dominique, 2880, Bornem (BE); Vanquickenborne, Stef, 2880, Bornem (BE)
(74) Representative: Dekker, Henrike Cornelie Christine

(57) **Abstract**

The present invention relates to an apparatus (2) and method for removing molded articles (10) from their molds (12). In particular, it relates to the removal of molded articles which have been formed around a respective mold. A removal apparatus comprises two opposed jaws (4,6) for clamping the molds (12) or the molded articles (10).

## Description

The present invention relates to an apparatus and method for removing molded articles from their molds. In particular, it relates to the removal of molded articles which have been formed around a respective mold.

Conventionally, molded articles which have been formed around respective molds are removed from their molds by a removal apparatus which comprises a plurality of scissor-like clamps having a pair of arms which pivot about one end and have a pair of engagement surfaces at the other end. When in an open position, each scissor-like clamp is able to receive a respective molded article, still carried by its mold, between its engagement surfaces. The arms of each clamp are then caused to contrarotate about their pivot point, thus bringing the engagement surfaces into contact with the molded article. With the molded article engaged by the engagement surfaces, the clamp is then moved laterally away from the mold to remove the molded article therefrom.

An alternative known method uses a similar apparatus, but the engagement surfaces of the arms contact the mold and are then moved towards the molded article such that the molded article is contacted by the arms and pushed from the mold.

However, there are a number of problems associated with the above-described conventional methods for removing molded articles. In particular, the molds need to be aligned very precisely with the open clamps to avoid damaging the molded article. If there is even a relatively small degree of misaligniment, the clamps can contact the molded articles as they are entering the removal apparatus. This can cause the molded articles to be torn or it can cause holes or weaknesses within the walls of the molded article.

Additionally, it is difficult to control the force with which the clamps engage the molds or molded articles. This results in a relatively large amount of a release agent being required to ensure the molded articles can be removed from the molds with the minimum of damage to the articles. The release agent is typically applied to the mold prior to molding and the amount that is applied can affect both the process time and the quality of the end product.

Furthermore, the conventional apparatus and method used to remove molded articles tends to generate relatively large forces and the articles being removed from their molds can experience quite harsh conditions. Whilst this is not a problem for articles made from a relatively robust material, it can cause problems when trying to remove articles made from relatively delicate materials, as these are easily damaged by the known apparatus and method.

The object of the invention is to overcome or ameliorate at least one of the above-mentioned problems and/or to improve the efficiency by which molded articles can be removed from their respective molds.

According to a first aspect, the present invention provides an apparatus for removing molded articles from their respective molds, comprising a plurality of pairs of jaws, each including a first jaw element and an opposed second jaw element, wherein the first jaw elements are carried by a first jaw element carrier and the second jaw elements are carried by a second jaw element carrier, and wherein the first and second jaw elements of each pair of jaws are moveable between an open position where the first and second jaw elements are spaced apart and a closed position where the first and second jaw elements are adjacent each other; a first drive mechanism capable of moving the jaws of each pair between the open and closed positions; and a second drive mechanism capable of moving each pair of jaws from a first position in which the pair of jaws may receive a respective mold and a second position in which the pair of jaws is spaced from the mold, whereby each pair of jaws is capable of engaging a respective mold or molded article carried on a mold and is movable relative to the mold to remove the engaged molded article from its mold.

By having the opposed jaw elements of each pair of jaws carried by a respective carrier, it is easier to control the jaws and address the problems mentioned above in connection with the conventional removal apparatus.

The term "adjacent" as used herein is to be understood as meaning in close proximity and does not require there to be any contact between the jaw elements, or between any two integers of the invention that are defined or described as being adjacent each other. Thus, a gap may exist between two elements that are described as being adjacent.

The term "drive mechanism" is to be understood as either a single component that is capable of moving the jaw elements and/or the jaws, or as an assembly of components which cooperate to effect the required movement.

In an embodiment of the invention, each pair of jaws engages a respective molded article. The molded article may be of any shape and size, provided it has been formed around a mold and may be removed by stripping it from its mold. For example, the molded article may be tubular in shape, having a regular cross-section which may be square, triangular, circular, etc. Alternatively, it may be conical, frusto-conical or pyramidal in shape.

In a further embodiment of the invention the first drive mechanism causes the first and second jaw elements to move in a first plane, for example vertically, and the second drive mechanism causes each pair of jaws to move in a second plane perpendicular to the first plane, for example horizontally. Such movement allows the jaw elements of each pair of jaws to engage or contact a respective molded article and to remove it from its mold in an efficient manner.

Optionally, the first and second drive mechanisms are controlled such that the second drive mechanism moves the jaws whilst they are in the closed position.

The first and/or second drive mechanism may act on the jaw elements or each pair of jaws directly or they may act on them via the respective jaw element carriers. Thus, the first drive mechanism may act on the first and/or second jaw element carriers to move each pair of jaws from the open to the closed position, or from the closed to the open position. Likewise, the second drive mechanism may act on the first and second jaw element carriers to move each pair of jaws from the first to second positions or *vice versa.*

In a further embodiment, the first jaw elements are slidably coupled to the first jaw element carrier and the second jaw elements are slidably coupled to the second jaw element carrier, whereby each of the first and second jaw elements are capable of moving in a first direction parallel to the longitudinal axis of the respective jaw element carriers and/or in a second direction defined by the movement of each first and second jaw elements towards and away from each other. In other words, movement in the second direction allows the jaw elements to move towards or away from each other relative to the jaw element carriers.

Having the first and second jaw elements slidably coupled to their respective carriers allows the apparatus to adjust to small misalignments between a pair of jaws and a respective mold. Thus, if a mold is not correctly aligned with a respective pair of jaws, the degree of play afforded by having the first and second jaw elements slidably coupled to their carriers can accommodate this without damaging the molded article, the mold and/or the jaws.

In a still further embodiment, the movement of the first and second jaw elements relative to their respective carriers is constrained by at least one stop element. In embodiments where there is provided a single stop element, this may be formed by a pin and aperture type arrangement, where one of the carrier and the jaw element is provided with a pin and the other of the carrier and the jaw element is provided with an aperture, wherein the diameter of the aperture is greater than the diameter of the pin and the pin is free to move within the aperture. In this arrangement, the degree of play afforded to each jaw element is defined by the difference between the diameter of the aperture and the diameter of the pin. Of course, the pin and/or the aperture may have a non-circular cross-section (for example, the aperture may be oval in shape). ln this case, the degree of play (i.e. the distance the jaw element can move relative to the carrier) is defined by the difference in the diameters of the pin and the aperture in the direction of movement, where diameter is taken to mean the distance between the opposing sides of the aperture and/or the opposing sides of the pin.

In embodiments where the jaw elements are slidably coupled to their respective carriers, movement in at least one direction may be controlled by a resiliently deformable member. In one such embodiment, the movement of each first and second jaw element in the second direction is controlled by a resiliently deformable member in contact with the respective jaw element carrier, whereby the first and second jaw elements are urged towards each other and movement of the first and second jaw elements away from each other is resisted. Such an arrangement is advantageous, as it allows the force applied by the jaw elements to be controlled. In particular, the force that each jaw applies to the mold or the molded article may be predetermined, as it is related to the restoring force exerted by the resiliently deformable member. Being able to control the force exerted by each jaw element means that molded articles made from relatively delicate materials can be treated more gently, thus reducing damage to the articles. Additionally, it may be possible to use less release fluid in such embodiments.

The resiliently deformable member may be a spring, for example a compression spring.

In a further embodiment, each of the first and second jaw element carriers is a unitary construction. Thus, the first jaw element carrier is a unitary construction and carries all of the first jaw elements and the second jaw element carrier is a unitary construction and carries all of the second jaw elements.

In a still further embodiment, each of the first and second jaw element carriers is a bar. In such embodiments, the jaw elements may be carried within a channel formed within the bar along its longitudinal axis.

In a yet still further embodiment, the first and second jaw element carriers each comprise a bar including a channel along the longitudinal axis of the bar, the channel being defined by opposed walls of the bar, wherein a portion of each of the jaw elements is carried within the channel and each jaw element includes an aperture therethrough, whereby each jaw element is constrained within its respective channel by a pin which passes through the aperture and is attached to at least one of the opposed walls of the channel. The cross-sectional area of the aperture may be greater than the cross-sectional area of the pin, whereby each jaw element has a degree of play (in other words is capable of moving within a constrained range) within a defined plane, for example the vertical or horizontal plane.

In a further embodiment, each jaw includes a recess which is shaped and configured to engage the mold or the molded article. Thus, the recess may be arcuate where the molded article has a circular cross-section, or it may angled to receive a mold or molded article having a non-circular shaped cross-section. The recess allows each jaw to engage a greater surface area of the mold or the molded article and thus spread the engagement force of the jaws to reduce the pressure on the molded article to be removed.

The apparatus may include a mold receiving passage adapted to receive therein a mold together with its associated molded article. Thus, the mold receiving passage may be sized and configured to receive the mold. The apparatus may be stationary and the molds may be transported to the apparatus following the molding process. In such cases, the mold may enter and leave the mold receiving passage via a single opening or the passage may include an first opening through which the molds may enter the apparatus and a second opening through which the molds may exit the apparatus after having had their associated molded articles removed.

Certain embodiments of the invention may include an alignment element capable of aligning a mold with a respective pair of jaws. The alignment element may further be capable of aligning a plurality of molds with their respective jaws. Having each mold properly aligned with its respective pair of jaws reduces wear and the risk of damage to both the mold and the jaw elements. It also reduces the risk of damage to the molded article during its removal from the mold.

In further embodiments of the invention, the apparatus is stationary and the a plurality of molds are fed into a mold receiving passage where each mold is aligned with its respective pair of jaws. The alignment element in this case may include a stop or it may form part of a mold transport assembly, where movement of the molds is controlled to affect the alignment of each mold with its respective pair of jaws. Thus the alignment element may a control element or programme within the mold transport assembly.

The first and/or second drive mechanisms may include a drive source independently selected from electrical, mechanical, pneumatic and hydraulic. Thus, the drive mechanism may include an electrical drive source, for example movement driven by an electromagnetic drive source; it may include a mechanical drive source, such as a drive shaft; it may include a pneumatic drive source or it may include a hydraulic drive source.

The first and second drive sources may be separate drive sources or they may be a single, common drive source.

According to a second aspect of the invention, there is provided a method for removing a plurality of molded articles from their respective molds, the method comprising:
(i) aligning the molds with a respective pair of jaws, wherein each pair of jaws includes a first jaw element and an opposed second jaw element, the first jaw elements being carried by a first jaw element carrier and the second jaw elements being carried by a second jaw element carrier;
(ii) moving the first and/or second jaw elements of each pair of jaws from an open position wherein the first and second jaw elements are spaced apart to a closed position wherein the first and second jaw elements are adjacent each other to engage a respective mold or molded article; and
(iii) moving each pair of jaws relative to the mold from a first position wherein the pair of jaws is adjacent to the mold to a second position wherein the pair of jaws is spaced from the mold, whereby each of the molded articles are removed from their respective molds.

Thus, in step (iii), each molded article is either engaged by a respective pair of jaws or the pair of jaws are brought into contact with the molded article during the movement from the first to the second positions and the molded article is thus slid or stripped from its mold

In an embodiment of the second aspect, the movement of the first and second jaw elements from the open position to the closed position is achieved by movement of the respective jaw element carriers.

In a further embodiment of the second aspect, the movement of each pair of jaws from the first position to the second position is achieved by movement of the respective jaw element carriers.

Unless otherwise stated, the above-described embodiments are not intended to be mutually exclusive. Accordingly, any two or more of the individual features described above in the embodiments of the invention together can be combined with the first or second aspects of the invention. Thus, the term "embodiment" used above should be construed as "an embodiment of the invention as defined in any preceding embodiment or aspect".

An embodiment of the invention will be described, by way of example only, with reference to the accompanying drawings in which:
Figure 1 is a perspective view of pairs of jaws of the apparatus in an open position;
Figure 2 is a perspective view of two pairs of jaws in an open position adjacent their respective molds prior to removal of the molded objects;
Figure 3 is a perspective view of the two pairs of jaws of Figure 2 in their closed position;
Figure 4 is a perspective view of the two pairs of jaws of Figure 2 in the process of removing the molded article; and
Figure 5 is a perspective view of the two pairs of jaws of Figure 2 in their open position after removal of the molded article.

With regard to the embodiment specifically described hereinbelow, reference to directions such as up, down, left, right, upper, lower, etc. refer to the orientation of the embodiment as shown in the Figures and is not intended to be limiting.

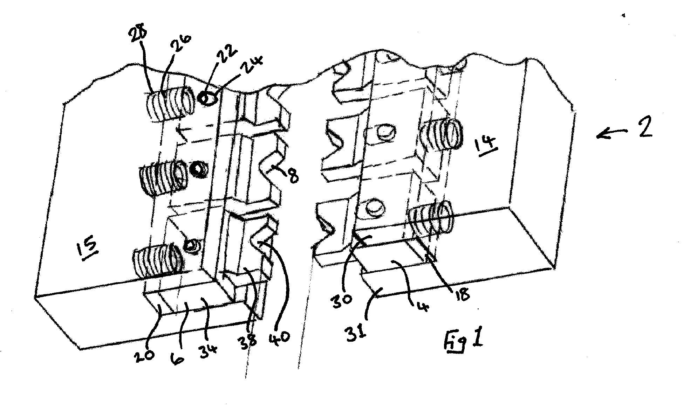

Figure 1 shows in general a portion of a removal apparatus 2 according to the present invention. The apparatus includes a plurality of pairs of opposed jaws, each comprising an first jaw element 6 and a second jaw element 4. Each first jaw element 6 is partially located within a channel 20 of a first jaw element carrier bar 15 and each second jaw element 4 is partially located within a channel 18 of a second jaw element carrier bar 14. The channel 18 of the second jaw element carrier bar 14 is defined by opposed walls 30, 31 of the second carrier bar 14 and the channel 20 of the first carrier bar 15 is similarly formed by opposing wall elements.

Each of the first jaw elements 6 includes a retained portion 34 which is located within the channel 20 and a projecting portion 38 which extends outwardly of the channel 20. The projecting portion 38 includes a shaped recess 40 which is sized and configured to receive a portion of a mold 12 having a square cross-section or a molded article 10 carried on the mold 12. The recess 40 defines an engagement surface 8 which is capable of engaging the mold 12 or the molded article 10.

The retained portion 34 of each first jaw element 6 is secured within the channel 20 by a pin 22 which passes through an aperture 24 located through the retained portion 34 and is fixed to the opposed walls of the channel 20. The aperture 24 has a diameter which is greater than the diameter of the pin 22 and thereby provides each first jaw element 6 with a degree of play within the channel. In other words the jaw element 6 is able to move within a constrained range defined by the difference in the diameters of the pin 22 and the aperture 24. Movement of each jaw element 6 in and out of the channel 20 is controlled by a coil spring 26 which is housed within a cylindrical bore 28 formed within the carrier bar 15, extending from the channel 20 away from the jaw elements 6. The spring 26 is arranged such one end engages a contact surface of the cylindrical bore 28 and the other end contacts the retained portion 34 of the jaw element 6, whereby each first jaw element 6 is urged towards the corresponding second jaw element.

Each second jaw element 4 is arranged to be the mirror image of the corresponding first jaw element 6.

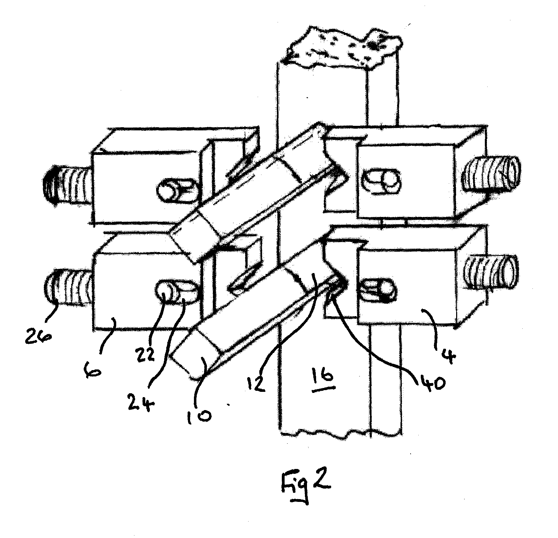

The apparatus 2 includes a mold receiving channel (not shown), which includes a mold opening and a mold exit, through which the molds 12 can enter and exit the apparatus 2. In the embodiment shown in Figures 2, 3, 4 and 5, a plurality of molds 12 are carried on common carrier 16.

The use of the apparatus is shown in Figures 2-5, where certain elements of the embodiment have been omitted for the purposes of clarity.

In Figure 2, the apparatus is in its start position, where the jaw elements 4,6 are in an open position and have located therebetween the respective molded article 10 carried on its mold 12. The molds 12 are aligned with their respective pairs of jaws 4,6 by controlling the movement of the common carrier 16. Suitable control mechanisms are well known to those skilled in the art and will not be discussed in detail herein.

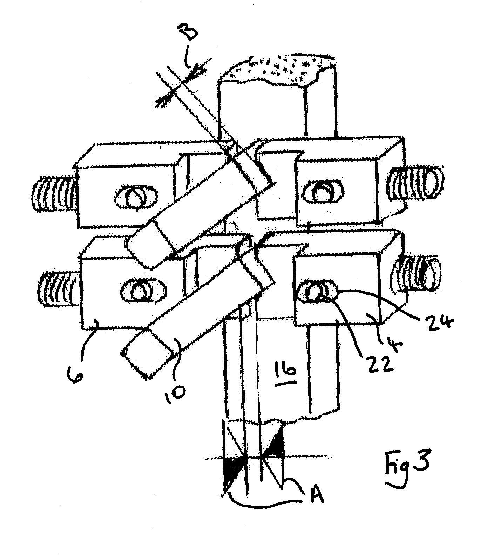

In Figure 3, the jaw elements 4,6 are moved to a closed position (shown by arrow A) wherein the engagement surface 8 of each jaw element engages a respective portion of the mold 12. The jaws 4,6 engage the mold 12 at a point which is spaced from the proximal end of the molded article 10, as shown by the gap B in Figure 3.

As the jaw elements 4,6 move to the closed position, they contact the mold 12 and the carrier bars 14,15 (not shown in Figure 3) are then further driven towards each other by a small amount which is less than the degree of play afforded by the difference in diameter of the pin 22 and the aperture 24. This causes the respective springs 26 to be compressed and the jaw elements 4,6 to exert a force on the mold 12 which is approximately equal to the restoring force of the spring 26.

The jaw elements 4,6 are moved towards each other by driving the respective carriers 14,15 to move towards each other. Suitable drive apparatus for driving the carriers 14,15 to close (and open) the jaws 4,6 are well known to those skilled in the art and will not be described in detail herein.

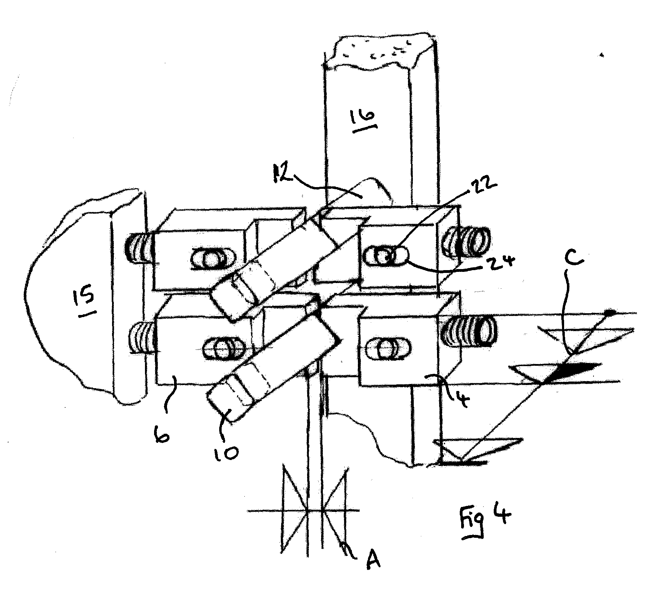

In Figure 4, the jaw elements 4,6 are maintained in the closed position. The jaw element carriers 14,15 are driven to move transversely relative to common mold carrier 16 (shown by arrow C). As each pair of jaw elements 4,6 is urged transversely relative to the mold carrier 16, the jaw elements 4,6 contact the proximal end of the respective molded article 10. Continued transverse movement of the jaw elements causes each of the molded articles 10 to be removed from their respective molds 12. Each molded article 10, which is being pushed by a pair of jaw elements 4,6, is ejected from its mold 12 into or onto a respective receiving element (not shown).

In an alternative embodiment (not shown) the jaw elements 4,6 may engage the molded article 10 directly.

Again, suitable drive mechanisms for moving the jaw element carriers 14,15 relative to the common mold carrier are well known to those skilled in the art and will not be described in detail herein.

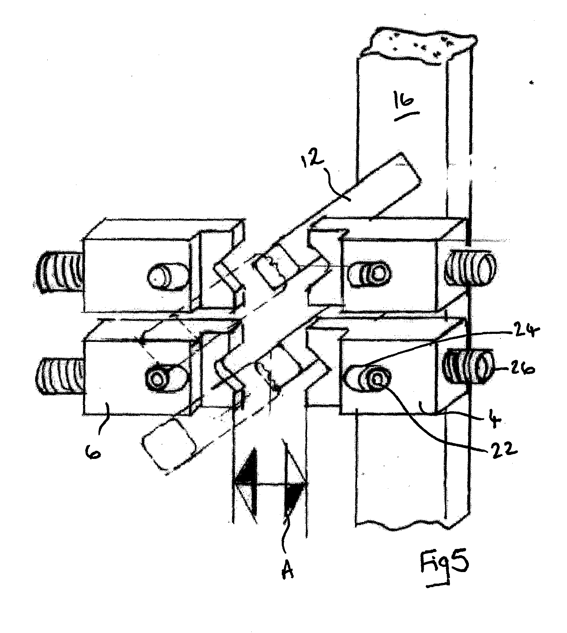

Figure 5 shows the jaw elements 4,6 and molds 12 after removal of the molded articles 10. The jaws 4,6 are driven to their open position (shown by arrow A) by their respective carriers 14,15 being driven away from each other. As shown in Figure 5, when the jaw elements 4,6 are opened, the springs 26 urge their respective jaw elements 4,6 towards each other, with the movement caused by the springs 26 being arrested by the pin 22 contacting a stop surface of the aperture 24.

Following the release of the molded articles 10, the jaw element carriers 14,15 are returned to their start position shown in Figure 2.

## Claims

1. An apparatus for removing molded articles from their respective molds, comprising a plurality of pairs of jaws, each including a first jaw element and an opposed second jaw element, wherein the first jaw elements are carried by a first jaw element carrier and the second jaw elements are carried by a second jaw element carrier, and wherein the first and second jaw elements of each pair of jaws are moveable between an open position where the first and second jaw elements are spaced apart and a closed position where the first and second jaw elements are adjacent each other; a first drive mechanism capable of moving the jaws of each pair between the open and closed positions; and a second drive mechanism capable of moving each pair of jaws from a first position in which the pair of jaws may receive a respective mold and a second position in which the pair of jaws is spaced from the mold, whereby each pair of jaws is capable of engaging a respective mold or molded article carried by a mold and is movable relative to the mold to remove the molded article from its mold.

2. An apparatus according to Claim 1, wherein the first drive mechanism causes the jaw elements to move in a first plane and the second drive mechanism causes the pairs of jaws to move in a second plane perpendicular to the first plane.

3. An apparatus according to Claim 2, wherein the first plane is a vertical plane and the second plane is a horizontal plane.

4. An apparatus according to any preceding claim, wherein each of the first jaw elements is slidably coupled to the first jaw element carrier and each of the second jaw elements is slidably coupled to the second jaw element carrier, whereby each of the first and second jaw elements is capable of moving in a first direction parallel to the longitudinal axis of the respective jaw element carrier and/or in a second direction defined by the movement of each first and second jaw elements towards and away from each other.

5. An apparatus according to Claim 4, wherein the movement of the first and second jaw elements relative to their respective carriers is constrained by at least one stop element.

6. An apparatus according to Claim 4 or Claim 5, wherein the movement of each first and second jaw element in the second direction is controlled by a resiliently deformable member in contact with the respective jaw element carrier, whereby the first and second jaw elements are urged towards each other and movement of the first and second jaw elements away from each other is resisted.

7. An apparatus according to any preceding claim, wherein each jaw includes a recess which is shaped and configured for engaging the mold or molded article.

8. An apparatus according to any preceding claim, wherein the apparatus further includes a mold receiving passage adapted to receive therein a mold together with its associated molded article.

9. An apparatus according to Claim 8, wherein the mold receiving passage includes an alignment element capable of aligning the mold with a respective pair of jaws.

10. An apparatus according to any preceding claim, wherein the first and second drive mechanisms each include a drive source independently selected from electrical, mechanical, pneumatic and hydraulic.

11. An apparatus according to Claim 10, wherein the first and second drive mechanisms share a common drive source.

12. An apparatus according to Claim 10 or Claim 11, wherein the first and/or second drive source is a mechanical drive source including a drive shaft.

13. A method of removing a plurality of molded articles from their respective molds, the method comprising:
(i) aligning the molds with a respective pair of jaws, wherein each pair of jaws includes a first jaw element and an opposed second jaw element, the first jaw elements being carried by a first jaw element carrier and the second jaw elements being carried by a second jaw element carrier;
(ii) moving the first and second jaw elements of each pair of jaws from an open position wherein the first and second jaw elements are spaced apart to a closed position wherein the first and second jaw elements are adjacent each other to engage a respective mold or molded article; and
(iii) moving each pair of jaws relative to the mold from a first position wherein the pair of jaws is adjacent to the mold to a second position wherein the pair of jaws is spaced from the mold, whereby each of the molded articles are removed from their respective molds.

14. A method according to Claim 13, wherein the movement of the first and second jaw elements form the open position to the closed position is achieved by movement of the respective jaw element carriers.

15. A method according to Claim 13 or Claim14, wherein the movement of each pair of jaws from the first position to the second position is achieved by movement of the respective jaw element carriers.
